(19) Europäisches Patentamt
European Patent Office
Office européen des brevets

(11) **EP 4 730 255 A1**

(12) **EUROPEAN PATENT APPLICATION**
published in accordance with Art. 153(4) EPC

(43) Date of publication:
**22.04.2026 Bulletin 2026/17**

(51) International Patent Classification (IPC):
**G06T 7/00** (2017.01)    **G06T 7/254** (2017.01)

(21) Application number: **23948347.2**

(52) Cooperative Patent Classification (CPC):
**G06T 7/0002; G06T 7/001; G06T 7/254**

(22) Date of filing: **04.08.2023**

(86) International application number:
**PCT/JP2023/028500**

(87) International publication number:
**WO 2025/032625 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **ARII, Motofumi
Tokyo 100-8310 (JP)**

(74) Representative: **Pfenning, Meinig & Partner mbB
Patent- und Rechtsanwälte
Theresienhöhe 11a
80339 München (DE)**

(54) **OBSERVATION DEVICE AND OBSERVATION METHOD**

(57) An observation device includes: a threshold set acquisition unit (2) to acquire respectively different N (N represents an integer equal to or more than two) threshold sets as threshold sets each including thresholds related to one or more types of observation components included in both of a first observation image that is an image obtained by capturing an observation target region and a second observation image that is an image obtained by capturing the observation target region at a time different from a time of the first observation image; and a difference calculation unit (3) to calculate a difference between each of the observation components included in the first observation image and each of the observation components included in the second observation image. Furthermore, the observation device includes: a comparison unit (4) to compare the difference between the observation components calculated by the difference calculation unit (3), and the threshold included in each of the threshold sets acquired by the threshold set acquisition unit (2) and related to each of the observation components; and a threshold set selection unit (5) to select one of the threshold sets from the N threshold sets acquired by the threshold set acquisition unit (2) on a basis of a result of the comparison performed by the comparison unit (4).

FIG. 1

**Description**

**TECHNICAL FIELD**

The present disclosure relates to an observation device and an observation method.

**BACKGROUND ART**

There is an observation device that calculates a difference between a plurality of observation images obtained by capturing an observation target region at respectively different times, compares the difference with a threshold, and detects a change in the observation target region on the basis of a comparison result of the difference with the threshold.
As such an observation device, for example, Patent Literature 1 discloses an observation device including a comparison unit that includes threshold sets each including thresholds related to one or more types of observation components included in an observation image, and compares each of the observation components and the threshold related to each of the observation components.

**CITATION LIST**

**PATENT LITERATURE**

Patent Literature 1: JP 2003-281664 A

**SUMMARY OF INVENTION**

**TECHNICAL PROBLEM**

The observation device disclosed in Patent Literature 1 includes only one threshold set included in the comparison unit. Hence, there is a case where the thresholds related to the observation components included in the threshold set are not values that are suitable for comparison with the difference. In such a case, there has been a problem that detection accuracy of a change in an observation target region deteriorates.
The present disclosure has been made to solve the above problem, and an object of the present disclosure is to provide an observation device that can increase detection accuracy of a change in an observation target region compared to the observation device disclosed in Patent Literature 1.

**SOLUTION TO PROBLEM**

An observation device according to the present disclosure includes: a threshold set acquisition unit to acquire N (N represents an integer equal to or more than two) threshold sets, which are different from each other, as threshold sets each including thresholds related to at least one type of observation component included in both of a first observation image that is obtained by capturing an observation target region and a second observation image that is obtained by capturing the observation target region at a time different from a time of the first observation image; a difference calculation unit to calculate differences between the observation components included in the first observation image and the observation components included in the second observation image, respectively; a comparison unit to perform, respectively, comparison of the differences of the observation components calculated by the difference calculation unit, and the thresholds included in the threshold sets acquired by the threshold set acquisition unit and respectively related to the observation components; and a threshold set selection unit to select a certain threshold set from the N threshold sets acquired by the threshold set acquisition unit on a basis of a result of the comparison performed by the comparison unit.

**ADVANTAGEOUS EFFECTS OF INVENTION**

According to the present disclosure, it is possible to increase detection accuracy of a change in an observation target region compared to the observation device disclosed in Patent Literature 1.

**BRIEF DESCRIPTION OF DRAWINGS**

FIG. 1 is a configuration diagram illustrating an observation device according to Embodiment 1.

FIG. 2 is a hardware configuration diagram illustrating hardware of the observation device according to Embodiment 1.

FIG. 3 is a hardware configuration diagram of a computer in a case where the observation device is implemented by software, firmware, or the like.

FIG. 4 is a flowchart illustrating an observation method that is a processing procedure performed by the observation device.

FIG. 5 is an explanatory view illustrating a first observation image $G_1$ and an observation target image $G_{2, m}$.

FIG. 6 is an explanatory view illustrating an example of a weight coefficient $W_d^t(t_d^u)$ that changes as time passes.

FIG. 7 is an explanatory view illustrating an example of a region for which a degree of importance has been set by a user.

FIG. 8 is an explanatory view illustrating an example of local information indicating whether or not an abnormality occurs in an observation target region.

FIG. 9 is an explanatory view obtained by overlaying FIGS. 7 and 8.

FIG. 10 is an explanatory view illustrating N threshold sets $S^1$ to $S^N$, a comparison result $R_{m, j}^n$ related to a difference $\Delta OC_{m, j}$ between observation components, a maximum score $\Omega_{m, MAX}$, and a threshold set $S_{m, MAX}$.

FIG. 11 is a configuration diagram illustrating an observation device according to Embodiment 2.

FIG. 12 is a hardware configuration diagram illustrating hardware of the observation device according to Embodiment 2.

FIG. 13 is an explanatory view illustrating a comparison result extracted by a score calculation unit 7a, and a score $\Omega^n$ (n = 1, ..., and N) of the threshold set $S^n$ that is based on the extracted comparison result.

## DESCRIPTION OF EMBODIMENTS

Hereinafter, a mode for carrying out the present disclosure will be described with reference to the accompanying drawings to describe the present disclosure in more detail.

Embodiment 1.

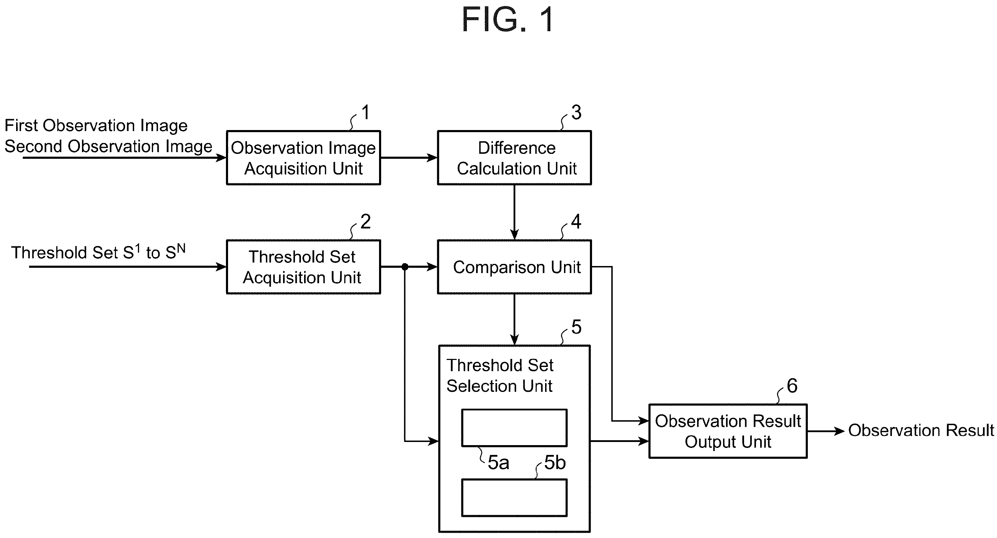

FIG. 1 is a configuration diagram illustrating an observation device according to Embodiment 1.

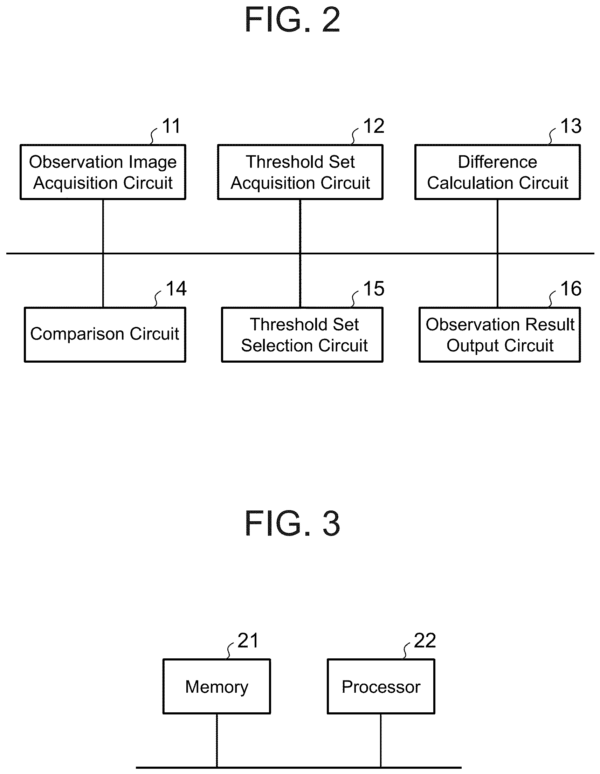

FIG. 2 is a hardware configuration diagram illustrating hardware of the observation device according to Embodiment 1.

The observation device illustrated in FIG. 1 includes an observation image acquisition unit 1, a threshold set acquisition unit 2, a difference calculation unit 3, a comparison unit 4, a threshold set selection unit 5, and an observation result output unit 6.

The observation image acquisition unit 1 is implemented by, for example, an observation image acquisition circuit 11 illustrated in FIG. 2.

The observation image acquisition unit 1 acquires a first observation image that is an image obtained by capturing an observation target region, and a second observation image that is an image obtained by capturing the observation target region at a time different from that of the first observation image.

The observation image acquisition unit 1 outputs each of the first observation image and the second observation image to the difference calculation unit 3.

The first observation image is, for example, an image obtained before an event occurs in the observation target region. Examples of the event include an earthquake or a flood. The first observation image is desirably an image at a time when an abnormality accompanying an event does not occur. Hence, the first observation image may be an image obtained after an event has occurred and the situation has returned to a normal state as a result of recovery.

The second observation image is, for example, an image obtained after an event occurs in the observation target region. The second observation image is not limited to one image, and may be M observation target images whose capturing times are respectively different from each other. M represents an integer equal to or more than one.

The threshold set acquisition unit 2 is implemented by, for example, a threshold set acquisition circuit 12 illustrated in FIG. 2.

The threshold set acquisition unit 2 acquires N threshold sets which are different from each other. Each threshold set includes thresholds related to one or more types of observation components included in both of the first observation image and the M observation target images that are the second observation images. N represents an integer equal to or more than two.

The threshold set acquisition unit 2 outputs the N threshold sets to each of the comparison unit 4 and the threshold set selection unit 5.

The difference calculation unit 3 is implemented by, for example, a difference calculation circuit 13 illustrated in FIG. 2.

The difference calculation unit 3 acquires each of the first observation image and the second observation image from the observation image acquisition unit 1.

The difference calculation unit 3 calculates a difference between each of observation components included in the first observation image and each of observation components included in the second observation image.

More specifically, the difference calculation unit 3 calculates the difference between each of the observation components included in the first observation image and each of the observation components included in each of the observation target images.

The difference calculation unit 3 outputs the difference between the observation components to the comparison unit 4.

The comparison unit 4 is implemented by, for example, a comparison circuit 14 illustrated in FIG. 2.

The comparison unit 4 acquires the N threshold sets from the threshold set acquisition unit 2, and acquires the difference between the observation components from the difference calculation unit 3.

The comparison unit 4 compares the difference between the observation components, with the threshold included in each of the threshold sets and related to each of the observation components.

The comparison unit 4 outputs a comparison result of the difference between the observation components with the threshold to each of the threshold set selection unit 5 and the observation result output unit 6.

The threshold set selection unit 5 is implemented by, for example, a threshold set selection circuit 15 illustrated in FIG. 2.

The threshold set selection unit 5 includes a score calculation unit 5a and a threshold set selection processing unit 5b.

The threshold set selection unit 5 acquires the N threshold sets from the threshold set acquisition unit 2, and acquires the comparison result of the difference between the observation components with the threshold from the comparison unit 4.

The threshold set selection unit 5 selects a certain threshold set from the N threshold sets on the basis of comparison results of the comparison unit 4.

The threshold set selection unit 5 outputs the selected threshold set to the observation result output unit 6.

The score calculation unit 5a calculates a score of each of the threshold sets as an index for determining a degree of excellence of each of the N threshold sets on the basis of the comparison results of the comparison unit 4.

More specifically, the score calculation unit 5a acquires, from the outside, local information that is information indicating whether or not an abnormality is occurring in the observation target region. The local information is acquired via, for example, a Social Networking Service (SNS) or Internet of Things (IoT). The score calculation unit 5a determines whether or not a comparison result from the comparison unit 4 is correct by cross-checking the local information and the comparison result. The score calculation unit 5a calculates a score of each of the threshold sets using a cross-check result indicating whether or not the comparison result is correct.

The score calculation unit 5a outputs the score of each of the threshold sets to the threshold set selection processing unit 5b.

The threshold set selection processing unit 5b acquires the score of each of the threshold sets from the score calculation unit 5a.

The threshold set selection processing unit 5b compares N scores calculated by the score calculation unit 5a, and selects a certain threshold set from the N threshold sets on the basis of a comparison result of the scores.

The threshold set selection processing unit 5b outputs the selected threshold set to the observation result output unit 6.

The observation result output unit 6 is implemented by, for example, an observation result output circuit 16 illustrated in FIG. 2.

The observation result output unit 6 acquires the comparison result of the difference between the observation components with the threshold from the comparison unit 4, and acquires the threshold set from the threshold set selection unit 5.

The observation result output unit 6 extracts the result of comparison for which the threshold included in the threshold set selected by the threshold set selection unit 5 has been used from comparison results of the comparison unit 4.

The observation result output unit 6 outputs the extracted comparison result as an observation result to, for example, an unillustrated display device.

FIG. 1 assumes that each of the observation image acquisition unit 1, the threshold set acquisition unit 2, the difference calculation unit 3, the comparison unit 4, the threshold set selection unit 5, and the observation result output unit 6 that are components of the observation device is implemented by dedicated hardware illustrated in FIG. 2. That is, it is assumed that the observation device is implemented by an observation image acquisition circuit 11, a threshold set acquisition circuit 12, a difference calculation circuit 13, a comparison circuit 14, a threshold set selection circuit 15, and an observation result output circuit 16.

Each of the observation image acquisition circuit 11, the threshold set acquisition circuit 12, the difference calculation circuit 13, the comparison circuit 14, the threshold set selection circuit 15, and the observation result output circuit 16 corresponds to, for example, a single circuit, a composite circuit, a programmed processor, a parallel-programmed processor, an Application Specific Integrated Circuit (ASIC), a Field-Programmable Gate Array (FPGA), or a combination thereof.

The components of the observation device are not limited to components that are implemented by dedicated hardware, and the observation device may be implemented by software, firmware, or a combination of software and firmware.

The software or the firmware is stored as programs in a memory of a computer. The computer means hardware that executes the programs, and may correspond to, for example, a Central Processing Unit (CPU), a Graphics Processing Unit (GPU), a center processing device, a processing device, an arithmetic operation device, a microprocessor, a microcomputer, a processor, or a Digital Signal Processor (DSP).

FIG. 3 is a hardware configuration diagram of a computer in a case where the observation device is implemented by software, firmware, or the like.

In a case where the observation device is implemented by software, firmware, or the like, programs for causing the computer to execute respective processing procedures performed in the observation image acquisition unit 1, the threshold set acquisition unit 2, the difference calculation unit 3, the comparison unit 4, the threshold set selection unit 5, and the observation result output unit 6 are stored in a memory 21. Furthermore, a processor 22 of the computer executes the programs stored in the memory 21.

Furthermore, FIG. 2 illustrates an example where each of the components of the observation device is implemented by dedicated hardware, and FIG. 3 illustrates an example where the observation device is implemented by software, firmware, or the like. However, this is merely an example, and part of the components of the observation device may be implemented by dedicated hardware, and the rest of the components may be implemented by software, firmware, or the like.

Next, an operation of the observation device illustrated in FIG. 1 will be described.

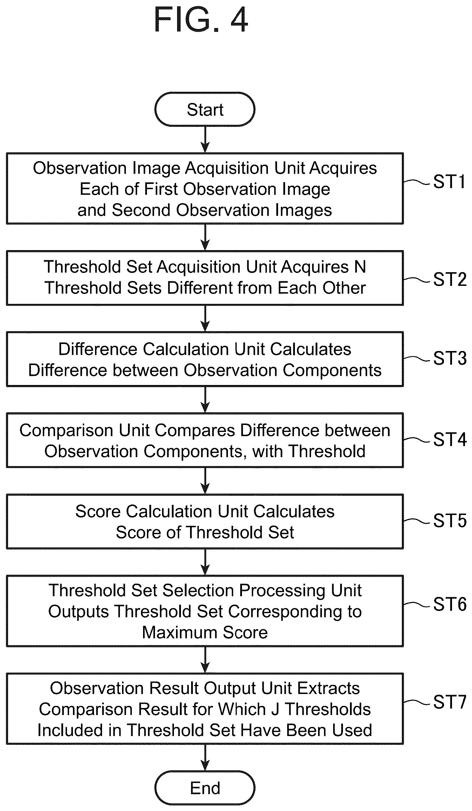

FIG. 4 is a flowchart illustrating an observation method that is a processing procedure performed in the observation device.

The observation image acquisition unit 1 acquires a first observation image $G_1$ obtained at an observation time t0 as the image obtained by capturing the observation target region (step ST1 in FIG. 4).

Furthermore, the observation image acquisition unit 1 acquires an observation target image $G_{2,m}$ obtained at an observation time $t_m$ as a second observation image $G_2$ (step ST1 in FIG. 4). m = 1, ..., and M holds.

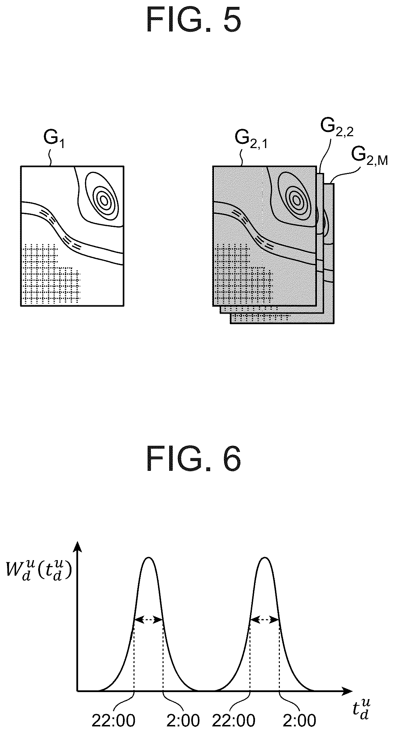

FIG. 5 is an explanatory view illustrating each of the first observation image $G_1$ and the observation target image $G_{2,m}$.

The observation image acquisition unit 1 outputs each of the first observation image $G_1$ and the observation target image $G_{2,m}$ to the difference calculation unit 3.

The threshold set acquisition unit 2 acquires N threshold sets $S^1$ to $S^N$ which are different from each other. Each threshold set includes thresholds $Th_j$ related to one or more types of observation components $OC_j$ included in the first observation image $G_1$ and in each of M observation target images $G_{2,1}$ to $G_{2,M}$ (step ST2 in FIG. 4). N represents an integer equal to or more than one, and j = 1, ..., and J holds. J represents an integer equal to or more than one.

Examples of the one or more types of observation components $OC_j$ included in the first observation image $G_1$ or the like include a brightness component, a chromaticity component, or a hue component.

The threshold set $S^n$ (n = 1, ..., and N) includes J thresholds $Th_1^n$ to $Th_J^n$ as expressed in the equation (1).

$$S^1 = Th_1^1, ..., \text{and } Th_J^1$$
$$S^2 = Th_1^2, ..., \text{and } Th_J^2$$
$$\vdots$$
$$S^N = Th_1^N, ..., \text{and } Th_J^N \ ... \ (1)$$

The threshold set acquisition unit 2 outputs the N threshold sets $S^1$ to $S^N$ to each of the comparison unit 4 and the threshold set selection unit 5.

The difference calculation unit 3 acquires the first observation image $G_1$ and each of the M second observation images $G_{2,1}$ to $G_{2,M}$ from the observation image acquisition unit 1.

As expressed in the following equation (2), the difference calculation unit 3 calculates a difference $\Delta OC_{m,j}$ (m = 1, ..., and M; j = 1, ..., and J) between an observation component $OC(1)_j$ (j = 1, ..., and J) included in the first observation image $G_1$ and an observation component $OC(2)_{m,j}$ included in the observation target image $G_{2,m}$ (m = 1, ..., and M) (step ST3 in FIG. 4). $OC(1)_j$ and $OC(2)_{m,j}$ represent observation components of the same type, and mean that, as the difference $\Delta OC_{m,j}$ between the observation component is greater, a change in the observation target region is greater.

$$\Delta OC_{m,j} = |OC(1)_j - OC(2)_{m,j}| \ ... \ (2)$$

The difference calculation unit 3 outputs the difference $\Delta OC_{m,j}$ between the observation components to the comparison unit 4.

The comparison unit 4 acquires the N threshold sets $S^1$ to $S^N$ from the threshold set acquisition unit 2, and acquires the difference $\Delta OC_{m,j}$ (m = 1, ..., and M; j = 1, ..., and J) between the observation components from the difference calculation unit 3.

The comparison unit 4 compares the difference $\Delta OC_{m,j}$ between the observation components, with a threshold $Th_j^n$ (j = 1, ..., and J; n = 1, ..., and N) included in the threshold set $S^n$ (n = 1, ..., and N) (step ST4 in FIG. 4).

When the difference $\Delta OC_{m,j}$ between the observation components is equal to or greater than the threshold $Th_j^n$, a change in the observation target region is large and, for example, a flood is highly likely to have occurred in the observation target region. On the other hand, when the difference $\Delta OC_{m,j}$ between the observation components is less than the threshold $Th_j^n$, the change in the observation target region is small and, for example, a flood is less likely to have occurred in the observation target region.

The comparison unit 4 outputs a comparison result $R_{m,j}^n$ (m = 1, ..., and M; j = 1, ... and, J; n = 1, ..., and N) of the difference $\Delta OC_{m,j}$ between the observation components and the threshold $Th_j^n$ to each of the threshold set selection unit 5 and the observation result output unit 6.

The score calculation unit 5a of the threshold set selection unit 5 acquires the N threshold sets $S^1$ to $S^N$ from the threshold set acquisition unit 2, and acquires from the comparison unit 4 the comparison result $R_{m,j}^n$ (m = 1, ..., and M; j = 1, ..., and J; n = 1, ..., and N) related to the difference $\Delta OC_{m,j}$ between the observation components included in the observation target image $G_{2,m}$ (m = 1, ..., and M).

As expressed in the following equation (3), the score calculation unit 5a calculates a score $\Omega_m^n$ (m = 1, ..., M; n = 1, ..., and N) of the threshold set $S^n$ (n = 1, ..., and N) as an index for determining a degree of excellence of the N threshold sets $S^1$ to $S^N$ on the basis of the comparison result $R_{m,j}^n$ related to the difference $\Delta OC_{m,j}$ between the observation components (step ST5 in FIG. 4).

The score calculation unit 5a outputs the score $\Omega_m^n$ of the threshold set $S^n$ to the threshold set selection processing unit 5b.

$$\Omega_m^n = 100 \times \frac{1}{K_d} \sum_{k=1}^{K_d} W_d^u \, (t_d^u) W_k^l (1 - \frac{dt_k^l}{W_m}) J_{m,n}^j \qquad (3)$$

In the equation (3), $W_d^u (t_d^u)$ represents a weight coefficient that changes as time passes as illustrated in FIG. 6. In an example in FIG. 6, a weight coefficient $W_d^u (t_d^u)$ is maximum when a time $t_d^u$ is around 24 o'clock, and the weight coefficient $W_d^u (t_d^u)$ is minimum when the time $t_d^u$ is around 12 o'clock. FIG. 6 is an explanatory view illustrating an example of a weight coefficient $W_d^t (t_d^u)$ that changes as time passes.

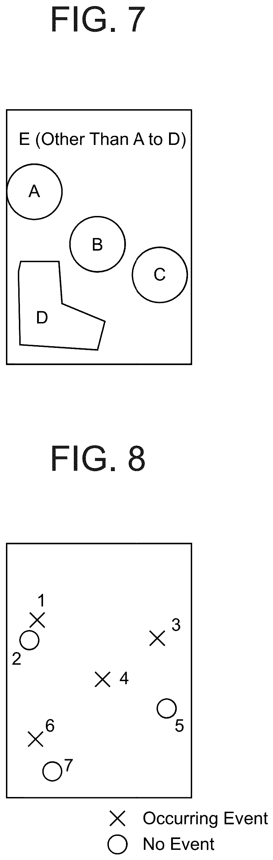

FIG. 7 is an explanatory view illustrating an example of a region for which the degree of importance has been set by a user.

In FIG. 7, A, B, C, D, and E each are regions to which the degrees of importance have been set by the user, and the weight coefficient $W_d^u (\varphi_d^u, \lambda_d^u,$ and $t_d^u)$ are weight coefficients of the region A, B, C, D, or E. The subscript d of the weight coefficient $W_d^u (\varphi_d^u, \lambda_d^u,$ and $t_d^u)$ means d = A, B, C, D, or E.

$(\varphi_d^u$ and $\lambda_d^u)$ represent a latitude of a region d and a longitude of the region d, respectively. $t_d^u$ represents a time of interest of the user.

$W_k^l$ represents, for example, a weight coefficient obtained via an SNS or IoT and corresponding to local information as illustrated in FIG. 8.

FIG. 8 is an explanatory view illustrating an example of local information indicating whether or not an abnormality occurs in an observation target region.

In the example in FIG. 8, $\bigcirc$ represents information of no event indicating a situation that a disaster is not occurring at a certain spot, and is, for example, $W_k^l = 0.3$. $\times$ represents information of an occurring event indicating a situation that a disaster is occurring at a certain spot, and is, for example, $W_k^l = 0.8$. In FIG. 8, numbers 1 to 7 are numbers for identifying certain spots.

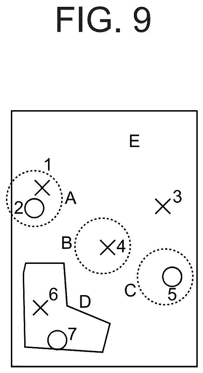

FIG. 9 is an explanatory view obtained by overlaying FIGS. 7 and 8. The region A includes spots 1 and 2, and $K_d = 2$ holds. The region B includes a spot 4, and $K_d = 1$ holds. The region C includes a spot 5, and $K_d = 1$ holds. The region D includes spots 6 and 7, and $K_d = 2$ holds.

As expressed in the following equation (4), $dt_k^l$ represents a time difference between the observation time $t_m$ of the observation target image $G_{2,m}$ and a time $t_k^l$ at which the local information has been obtained.

$$dt_k^l = t_m - t_k^l \ \dots \ (4)$$

$W_m$ represents a weight coefficient of the observation time $t_m$.

$J_{m,j}^n$ represents a cross-check result of the local information and the comparison result $R_{m,j}^n$ When the local information and the comparison result $R_{m,j}^n$ match and the comparison result $R_{m,j}^n$ is correct, $J_{m,j}^n$ is "1". When the local information and the comparison result $R_{m,j}^n$ do not match and the comparison result $R_{m,j}^n$ is not correct, $J_{m,j}^n$ is "0".

When, for example, the comparison result $R_{m,j}^n$ corresponding to the spot 1 is the threshold $Th_j^n$ or more, the local information at the spot 1 is "×", and therefore $J_{m,j}^n$ is "1". On the other hand, when the comparison result $R_{m,j}^n$ corresponding to the spot 1 is less than the threshold $Th_j^n$, the local information at the spot 1 is "×", and therefore $J_{m,j}^n$ is "0".

When, for example, the comparison result $R_{m,j}^n$ corresponding to the spot 2 is the threshold $Th_j^n$ or more, the local information at the spot 1 is "○∘", and therefore $J_{m,j}^n$ is "0". On the other hand, when the comparison result $R_{m,j}^n$ corresponding to the spot 2 is less than the threshold $Th_j^n$, the local information at the spot 2 is "○", and therefore $J_{m,j}^n$ is "1".

In the equation (3), when $(1-dt_k^l/W_m)J_{m,j}^n$ is a negative value, the value is replaced with 0.

The score calculation unit 5a calculates the score $\Omega_m^n$ of the threshold set $S^n$ using the cross-check result $j_{m,j}^n$ indicating whether or not the comparison result $R_{m,j}^n$ is correct as described above. Hence, the score $\Omega_m^n$ of the threshold set $S^n$ is an index indicating whether or not the threshold $Th_j^n$ ($j = 1, \dots,$ and J; n = 1, ..., and N) included in the threshold set $S^n$ is an appropriate value.

The threshold set selection processing unit 5b acquires the score $\Omega_m^n$ (m = 1, ..., and M; n = 1, ..., and N) of the threshold set $S^n$ (n = 1, ..., and N) from the score calculation unit 5a.

The threshold set selection processing unit 5b compares N scores $\Omega_m^l$ to $\Omega_m^n$ for each of the M observation target image $G_{2,1}$ to $G_{2,M}$.

That is, in a case where, for example, the observation target image is $G_{2,1}$, the threshold set selection processing unit 5b compares N scores $\Omega_1^l$ to $\Omega_1^n$ for the observation target image $G_{2,1}$.

In a case where, for example, the observation target image is $G_{2,M}$, the threshold set selection processing unit 5b compares N scores $\Omega_M^1$ to $\Omega_M^N$ for the observation target image $G_{2,M}$.

The threshold set selection processing unit 5b selects a maximum score $\Omega_{m,MAX}$ from the N scores $\Omega_m^1$ to $\Omega_m^N$ as expressed in the following equation (5) on the basis of the comparison result of the N scores $Q_m^1$ to $\Omega_m^N$.

$$\Omega_{m,MAX} = \max_{S^n} \Omega_m^n \qquad (5)$$

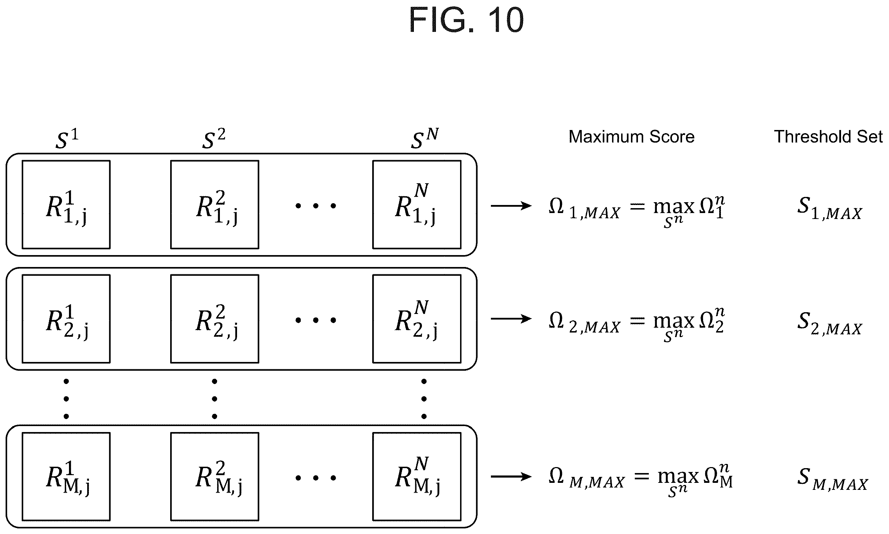

FIG. 10 is an explanatory view illustrating the N threshold sets $S^1$ to $S^N$, the comparison result $R_{m,j}^n$ related to the difference $\Delta OC_{m,j}$ between observation components, the maximum score $\Omega_{m,MAX}$, and the threshold set $S_{m,MAX}$.

The threshold set $S_{m,MAX}$ corresponding to the maximum score $\Omega_{m,MAX}$ (m = 1, ..., and M) among the N threshold sets $S^1$ to $S^N$ is highly likely to be the threshold set most suitable to the observation target image $G_{2,m}$ (m = 1, ..., and M).

The threshold set selection processing unit 5b outputs the threshold set $S_{m,MAX}$ corresponding to the maximum score $\Omega_{m,MAX}$ to the observation result output unit 6 (step ST6 in FIG. 4).

In the observation device illustrated in FIG. 1, the threshold set selection processing unit 5b outputs the threshold set $S_{m,MAX}$ corresponding to the maximum score $\Omega_{m,MAX}$ to the observation result output unit 6. However, it is sufficient that the threshold set can be optimized, and the threshold set to be output to the observation result output unit 6 is not limited to the threshold set $S_{m,MAX}$ corresponding to the maximum score $\Omega_{m,MAX}$. Hence, the threshold set selection processing unit 5b may output, for example, the threshold set corresponding to the second largest score among the N scores $Q_{m,1}$ to $\Omega_{m,N}$ to the observation result output unit 6 if there is no practical problem.

The observation result output unit 6 acquires the comparison result $R_{m,j}^n$ (m = 1, ..., and M; j = 1, ..., and J; n = 1, ..., and N) from the comparison unit 4, and acquires a threshold set $S_{MAX}$ from the threshold set selection unit 5.

The observation result output unit 6 extracts a comparison result for which the J thresholds $Th_1^n$ to $Th_j^n$ included in the threshold set $S_{m,MAX}$ have been used from the comparison results $R_{m,j}^n$ (m = 1, ..., and M; j = 1, ..., and J; n = 1, ..., and N) (step ST7 in FIG. 4).

When, for example, the threshold set $S_{m,MAX}$ is the threshold set $S^3$, the observation result output unit 6 extracts a comparison result $R_{m,j}^3$ for which the J thresholds $Th_1^3$ to $Th_j^3$ included in the threshold set $S^3$ have been used from the comparison results $R_{m,j}^n$ (m = 1, ..., and M; j = 1, ..., and J; n = 1, ..., and N).

When, for example, the threshold set $S_{m,MAX}$ is the threshold set $S^4$, the observation result output unit 6 extracts a comparison result $R_{m,j}^4$ for which the J thresholds $Th_1^4$ to $Th_j^4$ included in the threshold set $S^4$ have been used from the comparison results $R_{m,j}^n$ (m = 1, ..., and M; j = 1, ..., and J; n = 1, ..., and N).

The observation result output unit 6 outputs the extracted comparison result as an observation result to, for example, an unillustrated display device.

According to above Embodiment 1, the observation device includes the threshold set acquisition unit 2 that acquires the respectively different N (N represents the integer equal to or more than two) threshold sets as threshold sets each including the thresholds related to one or more types of observation components included in both of the first observation image that is the image obtained by capturing the observation target region and the second observation image that is the image obtained by capturing the observation target region at the time different from that of the first observation image, and the difference calculation unit 3 that calculates a difference between each of the observation components included in the first observation image and each of the observation components included in the second observation image. Furthermore, the observation device includes the comparison unit 4 that compares the difference between the observation components calculated by the difference calculation unit 3, with the threshold included in each of the threshold sets acquired by the threshold set acquisition unit 2 and related to each of the observation components, and the threshold set selection unit 5 that selects a certain threshold set from the N threshold sets acquired by the threshold set acquisition unit 2 on the basis of a comparison result of the comparison unit 4. Accordingly, it is possible to increase detection accuracy of a change in an observation target region compared to the observation device disclosed in Patent Literature 1.

Embodiment 2.

Embodiment 2 will describe an observation device in which the threshold set selection unit 7 includes a score calculation unit 7a and a threshold set selection processing unit 7b.

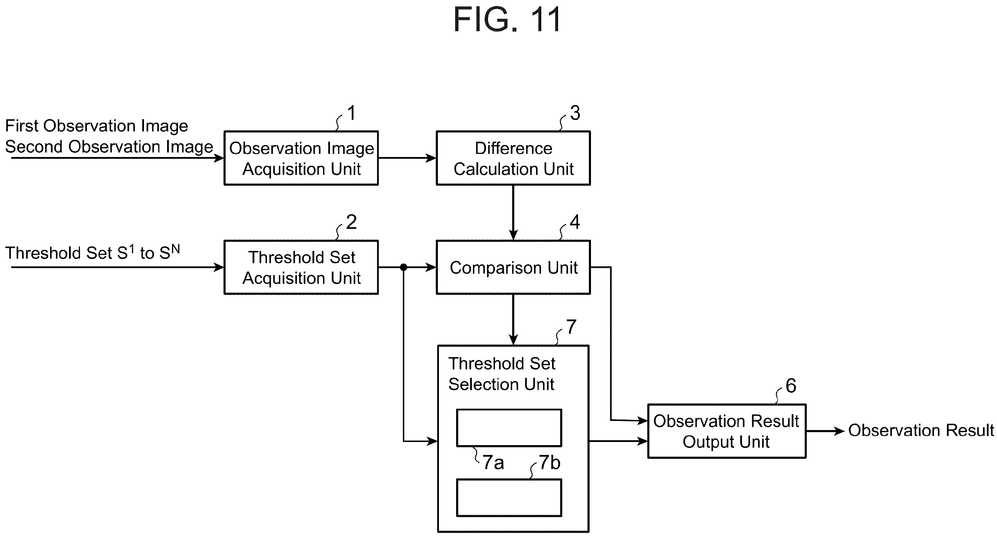

FIG. 11 is a configuration diagram illustrating the observation device according to Embodiment 2. Note that, in FIG. 11, the same reference numerals as those in FIG. 1 indicate identical or corresponding parts, and therefore detailed description thereof will be omitted.

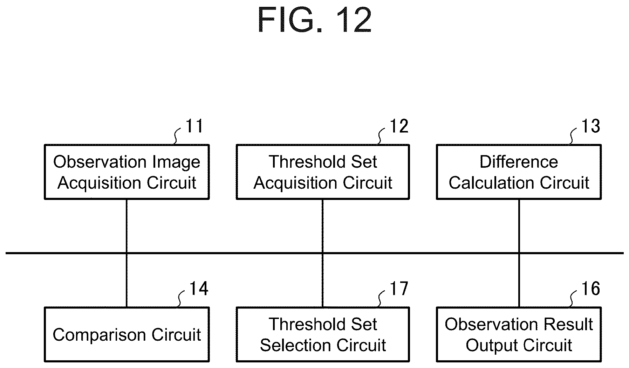

FIG. 12 is a hardware configuration diagram illustrating hardware of the observation device according to Embodiment 2. Note that, in FIG. 12, the same reference numerals as those in FIG. 2 indicate identical or corresponding parts, and therefore detailed description thereof will be omitted.

The observation device illustrated in FIG. 11 includes the observation image acquisition unit 1, the threshold set acquisition unit 2, the difference calculation unit 3, the comparison unit 4, the threshold set selection unit 7, and the observation result output unit 6.

The threshold set selection unit 7 is implemented by, for example, a threshold set selection circuit 17 illustrated in FIG. 12.

The threshold set selection unit 7 includes a score calculation unit 7a and a threshold set selection processing unit 7b.

The threshold set selection unit 7 acquires the N threshold sets from the threshold set acquisition unit 2, and acquires the comparison result of the difference between the observation components with the threshold from the comparison unit 4.

The threshold set selection unit 7 selects a certain threshold set from the N threshold sets on the basis of comparison results of the comparison unit 4.

The threshold set selection unit 7 outputs the selected threshold set to the observation result output unit 6.

The score calculation unit 7a acquires the comparison result $R_{m,j}^{n}$ ($m = 1, ...,$ and $M$; $j = 1, ...,$ and $J$; $n = 1, ...,$ and $N$) from the comparison unit 4.

The score calculation unit 7a extracts a comparison result for which each threshold set $S^n$ ($n = 1, ...,$ and $N$) has been used from the comparison results $R_{m,j}^{n}$ ($m = 1, ...,$ and $M$; $j = 1, ...,$ and $J$; $n = 1, ...,$ and $N$).

The score calculation unit 7a calculates a score $\Omega^n$ ($n = 1, ...,$ and $N$) of each of the threshold sets $S^n$ on the basis of the extracted comparison result.

The score calculation unit 7a outputs the score $\Omega^n$ ($n = 1, ...,$ and $N$) of the threshold set $S^n$ to the threshold set selection processing unit 7b.

The threshold set selection processing unit 7b acquires the score $\Omega^n$ ($n = 1, ...,$ and $N$) of the threshold set $S^n$ from the score calculation unit 7a.

The threshold set selection processing unit 7b compares N scores $\Omega^1$ to $\Omega^N$, and selects a certain threshold set from the N threshold sets $S^1$ to $S^N$ on the basis of a comparison result of the scores $\Omega^1$ to $\Omega^N$.

The threshold set selection processing unit 7b outputs the selected threshold set to the observation result output unit 6.

FIG. 11 assumes that each of the observation image acquisition unit 1, the threshold set acquisition unit 2, the difference calculation unit 3, the comparison unit 4, the threshold set selection unit 7, and the observation result output unit 6 that are components of the observation device is implemented by dedicated hardware illustrated in FIG. 12. That is, it is assumed that the observation device is implemented by the observation image acquisition circuit 11, the threshold set acquisition circuit 12, the difference calculation circuit 13, the comparison circuit 14, the threshold set selection circuit 17, and the observation result output circuit 16.

Each of the observation image acquisition circuit 11, the threshold set acquisition circuit 12, the difference calculation circuit 13, the comparison circuit 14, the threshold set selection circuit 17, and the observation result output circuit 16 corresponds to, for example, a single circuit, a composite circuit, a programmed processor, a parallel-programmed processor, an ASIC, an FPGA, or a combination thereof.

The components of the observation device are not limited to components that are implemented by dedicated hardware, and the observation device may be implemented by software, firmware, or a combination of software and firmware.

In a case where the observation device is implemented by software, firmware, or the like, programs for causing the computer to execute respective processing procedures performed in the observation image acquisition unit 1, the threshold set acquisition unit 2, the difference calculation unit 3, the comparison unit 4, the threshold set selection unit 7, and the observation result output unit 6 are stored in the memory 21 in FIG. 3. Furthermore, the processor 22 illustrated in FIG. 3 executes the programs stored in the memory 21.

Furthermore, FIG. 12 illustrates an example where each of the components of the observation device is implemented by dedicated hardware, and FIG. 3 illustrates an example where the observation device is implemented by software, firmware, or the like. However, this is merely an example, and part of the components of the observation device may be implemented by dedicated hardware, and the rest of the components may be implemented by software, firmware, or the like.

Next, an operation of the observation device illustrated in FIG. 11 will be described. In this regard, the components other than the score calculation unit 7a and the threshold set selection processing unit 7b are the same as those of the observation device illustrated in FIG. 1. Hence, only operations of the score calculation unit 7a and the threshold set selection processing unit 7b will be described hereinafter.

The score calculation unit 7a acquires the comparison result $R_{m,j}^n$ ($m = 1, ...,$ and $M$; $j = 1, ...,$ and $J$; $n = 1, ...,$ and $N$) from the comparison unit 4.

The score calculation unit 7a extracts a comparison result for which each of the threshold sets $S^n$ ($n = 1, ...,$ and $N$) has been used from the comparison result $R_{m,j}^n$ ($m = 1, ...,$ and $M$; $j = 1, ...,$ and $J$; $n = 1, ...,$ and $N$).

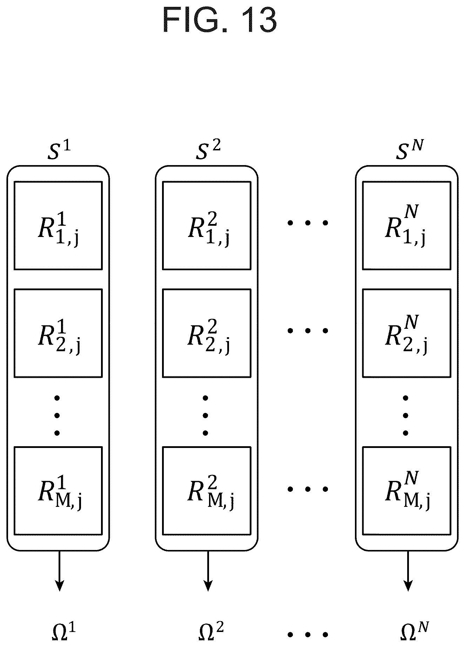

As illustrated in FIG. 13, the comparison result extracted by the score calculation unit 7a is a comparison result for which each of the threshold sets $S^n$ ($n = 1, ...,$ and $N$) has been used among comparison results related to $J$ observation components $OC(2)_{m,j}$ ($m = 1, ...,$ and $M$; $j = 1, ...,$ and $J$) included in each of the $M$ observation target images $G_{2,1}$ to $G_{2,M}$.

FIG. 13 illustrates an example where comparison results $R_{1,j}^1$ to $R_{M,j}^1$ for which the threshold set $S^1$ has been used, comparison results $R_{1,j}^2$ to $R_{M,j}^2$ for which the threshold set $S^2$ has been used, and comparison results $R_{1,j}^N$ to $R_{M,j}^N$ for which the threshold set $S^N$ has been used are extracted.

FIG. 13 is an explanatory view illustrating a comparison result extracted by the score calculation unit 7a, and the score $\Omega^n$ ($n = 1, ...,$ and $N$) of the threshold set $S^n$ that is based on the extracted comparison result.

As expressed in the following equation (6), the score calculation unit 7a calculates the score $\Omega^n$ ($n = 1, ...,$ and $N$) of each of the threshold sets $S^n$ on the basis of the extracted comparison result.

The score calculation unit 7a outputs the score $\Omega^n$ ($n = 1, ...,$ and $N$) of the threshold set $S^n$ to the threshold set selection processing unit 7b.

$$\Omega^n = \frac{1}{M} \sum_{m=1}^{M} \Omega_m^n \qquad (6)$$

The threshold set selection processing unit 7b acquires the score $\Omega^n$ ($n = 1, ...,$ and $N$) of the threshold set $S^n$ from the score calculation unit 7a.

The threshold set selection processing unit 7b compares the $N$ scores $\Omega^l$ to $\Omega^n$, and selects a maximum score $\Omega_{MAX}$ among the $N$ scores $\Omega^l$ to $\Omega^n$ as expressed in the following equation (7).

The threshold set selection processing unit 7b outputs the threshold set $S_{m,MAX}$ corresponding to the maximum score $\Omega_{MAX}$ among the $N$ threshold sets $S^1$ to $S^N$ to the observation result output unit 6.

$$\Omega_{MAX} = \max_{S^n} \Omega_j \qquad (7)$$

In the observation device illustrated in FIG. 11, the threshold set selection processing unit 7b outputs the threshold set $S_{MAX}$ corresponding to the maximum score $\Omega_{MAX}$ to the observation result output unit 6. However, it is possible that the threshold set can be optimized, and the threshold set to be output to the observation result output unit 6 is not limited to the threshold set $S_{MAX}$ corresponding to the maximum score $\Omega_{MAX}$. Hence, the threshold set selection processing unit 7b may output, for example, the threshold set corresponding to the second largest score among the N scores $\Omega^1$ to $\Omega^N$ to the observation result output unit 6 if there is no practical problem.

According to above Embodiment 2, the observation device is configured in such a way that the threshold set selection unit 7 includes the score calculation unit 7a that extracts from the comparison result of the comparison unit 4 a comparison result for which each of the threshold sets acquired by the threshold set acquisition unit 2 has been used, and calculates a score of each of the threshold sets on the basis of the extracted comparison result, and the threshold set selection processing unit 7b that compares a plurality of scores calculated by the score calculation unit 7a, and selects a certain threshold set from the N threshold sets acquired by the threshold set acquisition unit 2 on the basis of a comparison result of the scores. Accordingly, it is possible to increase detection accuracy of a change in an observation target region compared to the observation device disclosed in Patent Literature 1.

Note that the present disclosure allows free combinations of the embodiments, modification of arbitrary components in the embodiments, or omission of arbitrary components in the embodiments.

**INDUSTRIAL APPLICABILITY**

The present disclosure is suitable to an observation device and an observation method.

**REFERENCE SIGNS LIST**

1: observation image acquisition unit, 2: threshold set acquisition unit, 3: difference calculation unit, 4: comparison unit, 5: threshold set selection unit, 5a: score calculation unit, 5b: threshold set selection processing unit, 6: observation result output unit, 7: threshold set selection unit, 7a: score calculation unit, 7b: threshold set selection processing unit, 11: observation image acquisition circuit, 12: threshold set acquisition circuit, 13: difference calculation circuit, 14: comparison circuit, 15: threshold set selection circuit, 16: observation result output circuit, 17: threshold set selection circuit, 21: memory, 22: processor

**Claims**

1. An observation device comprising:

   a threshold set acquisition unit to acquire N (N represents an integer equal to or more than two) threshold sets, which are different from each other, as threshold sets each including thresholds related to at least one type of observation component included in both of a first observation image that is obtained by capturing an observation target region and a second observation image that is obtained by capturing the observation target region at a time different from a time of the first observation image;
   a difference calculation unit to calculate differences between the observation components included in the first observation image and the observation components included in the second observation image, respectively;
   a comparison unit to perform, respectively, comparison of the differences of the observation components calculated by the difference calculation unit, and the thresholds included in the threshold sets acquired by the threshold set acquisition unit and respectively related to the observation components; and
   a threshold set selection unit to select a certain threshold set from the N threshold sets acquired by the threshold set acquisition unit on a basis of a result of the comparison performed by the comparison unit.

2. The observation device according to claim 1, further comprising an observation result output unit to extract a comparison result for which a threshold included in the certain threshold set selected by the threshold set selection unit has been used from the result of the comparison performed by the comparison unit, and output the comparison result extracted as an observation result.

3. The observation device according to claim 1, wherein the threshold set selection unit includes

   a score calculation unit to calculate scores of the threshold sets, respectively, as an index for determining a degree of excellence of each of the N threshold sets acquired by the threshold set acquisition unit on the basis of the result of the comparison performed by the comparison unit, and
   a threshold set selection processing unit to perform comparison of the scores whose number is N calculated by the score calculation unit with each other, and select a certain threshold set from the N threshold sets acquired by the threshold set acquisition unit on a basis of a result of the comparison of the scores.

4. The observation device according to claim 3, wherein the score calculation unit acquires, from an outside, local information that indicates whether or not an abnormality occurs in the observation target region, perform cross-checking of the local information with the result of the comparison performed by the comparison unit, and calculate the score of each of the threshold sets using a result of the cross-checking.

5. The observation device according to claim 1, wherein

   as the second observation images, there are M (M represents an integer equal to or more than one) observation target images whose capturing times are different from each other,
   the difference calculation unit calculates differences between the observation components included in the first observation image and the observation components included in the observation images, respectively, and
   the comparison unit performs, respectively, comparison of the differences of the observation components calculated by the difference calculation unit, and the thresholds included in the N threshold sets acquired by the threshold set acquisition unit and related to each of the observation components.

6. The observation device according to claim 5, wherein the threshold set selection unit includes

   a score calculation unit to calculate scores of the threshold sets, respectively, as an index for determining a degree of excellence of each of the N threshold sets acquired by the threshold set acquisition unit on the basis of the result of the comparison performed by the comparison unit, and
   a threshold set selection processing unit to perform comparison of the scores whose number is N calculated by the score calculation unit with each other, and select a certain threshold set from the N threshold sets acquired by the threshold set acquisition unit on a basis of a result of the comparison of the scores.

7. The observation device according to claim 5, wherein the threshold set selection unit includes

   a score calculation unit to extract, from results of the comparison performed by the comparison unit, comparison results for which the threshold sets acquired by the threshold set acquisition unit has been used, respectively, and calculate scores of the threshold sets on a basis of the comparison results extracted, and
   a threshold set selection processing unit to perform comparison of the scores calculated by the score calculation unit with each other, and select a certain threshold set from the N threshold sets acquired by the threshold set acquisition unit on a basis of a result of the comparison of the score.

8. An observation method comprising:

   a step of, by a threshold set acquisition unit, acquiring N (N represents an integer equal to or more than two) threshold sets, which are different from each other, as threshold sets each including thresholds related to at least one type of observation component included in both of a first observation image that is obtained by capturing an observation target region and a second observation image that is obtained by capturing the observation target region at a time different from a time of the first observation image;
   a step of, by a difference calculation unit, calculating differences between the observation components included in the first observation image and the observation components included in the second observation image, respectively;
   a step of, by a comparison unit, performing comparison of the differences of the observation components calculated by the difference calculation unit, and the thresholds included in the threshold sets acquired by the threshold set acquisition unit and respectively related to the observation components; and
   a step of, by a threshold set selection unit, selecting a certain threshold set from the N threshold sets acquired by the threshold set acquisition unit on a basis of a result of the comparison performed by the comparison unit.

# FIG. 1

First Observation Image
Second Observation Image → **1** Observation Image Acquisition Unit → **3** Difference Calculation Unit

Threshold Set $S^1$ to $S^N$ → **2** Threshold Set Acquisition Unit → **4** Comparison Unit

**5** Threshold Set Selection Unit

**5a**  **5b**

**6** Observation Result Output Unit → Observation Result

EP 4 730 255 A1

12

# FIG. 2

| 11 | 12 | 13 |
|---|---|---|
| Observation Image Acquisition Circuit | Threshold Set Acquisition Circuit | Difference Calculation Circuit |

| 14 | 15 | 16 |
|---|---|---|
| Comparison Circuit | Threshold Set Selection Circuit | Observation Result Output Circuit |

# FIG. 3

| 21 | 22 |
|---|---|
| Memory | Processor |

# FIG. 4

```
            ┌─────────┐
            │  Start  │
            └─────────┘
                 │
                 ▼
┌───────────────────────────────────────┐
│ Observation Image Acquisition Unit Acquires │      ST1
│      Each of First Observation Image        │
│       and Second Observation Images         │
└───────────────────────────────────────┘
                 │
                 ▼
┌───────────────────────────────────────┐
│    Threshold Set Acquisition Unit Acquires N  │      ST2
│    Threshold Sets Different from Each Other    │
└───────────────────────────────────────┘
                 │
                 ▼
┌───────────────────────────────────────┐
│     Difference Calculation Unit Calculates     │      ST3
│  Difference between Observation Components  │
└───────────────────────────────────────┘
                 │
                 ▼
┌───────────────────────────────────────┐
│ Comparison Unit Compares Difference between │      ST4
│   Observation Components, with Threshold   │
└───────────────────────────────────────┘
                 │
                 ▼
┌───────────────────────────────────────┐
│       Score Calculation Unit Calculates       │      ST5
│          Score of Threshold Set              │
└───────────────────────────────────────┘
                 │
                 ▼
┌───────────────────────────────────────┐
│   Threshold Set Selection Processing Unit    │      ST6
│   Outputs Threshold Set Corresponding to    │
│             Maximum Score                    │
└───────────────────────────────────────┘
                 │
                 ▼
┌───────────────────────────────────────┐
│   Observation Result Output Unit Extracts    │      ST7
│  Comparison Result for Which J Thresholds   │
│  Included in Threshold Set Have Been Used   │
└───────────────────────────────────────┘
                 │
                 ▼
            ┌─────────┐
            │   End   │
            └─────────┘
```

# FIG. 5

# FIG. 6

# FIG. 7

E (Other Than A to D)

A

B

C

D

# FIG. 8

1

2

3

4

5

6

7

✕ Occurring Event

◯ No Event

# FIG. 9

# FIG. 10

$S^1$     $S^2$     $S^N$     Maximum Score     Threshold Set

| | | | |
|---|---|---|---|

$R_{1,j}^1$    $R_{1,j}^2$    $\cdots$    $R_{1,j}^N$   $\longrightarrow$  $\Omega_{1,MAX} = \max_{S^n} \Omega_1^n$    $S_{1,MAX}$

$R_{2,j}^1$    $R_{2,j}^2$    $\cdots$    $R_{2,j}^N$   $\longrightarrow$  $\Omega_{2,MAX} = \max_{S^n} \Omega_2^n$    $S_{2,MAX}$

$R_{M,j}^1$    $R_{M,j}^2$    $\cdots$    $R_{M,j}^N$   $\longrightarrow$  $\Omega_{M,MAX} = \max_{S^n} \Omega_M^n$    $S_{M,MAX}$

# FIG. 11

# FIG. 12

| Observation Image Acquisition Circuit 11 | Threshold Set Acquisition Circuit 12 | Difference Calculation Circuit 13 |
|---|---|---|
| Comparison Circuit 14 | Threshold Set Selection Circuit 17 | Observation Result Output Circuit 16 |

# FIG. 13

# EP 4 730 255 A1

## INTERNATIONAL SEARCH REPORT

International application No.

**PCT/JP2023/028500**

### A. CLASSIFICATION OF SUBJECT MATTER

*G06T 7/00*(2017.01)i
FI: G06T7/00 300Z

According to International Patent Classification (IPC) or to both national classification and IPC

### B. FIELDS SEARCHED

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-166369 A (JTEKT CORP.) 02 November 2022 (2022-11-02)<br>paragraph [0095] | 1-8 |
| A | JP 2020-85997 A (CANON KABUSHIKI KAISHA) 04 June 2020 (2020-06-04)<br>paragraph [0031] | 1-8 |
| A | JP 2016-206691 A (PROSPER CREATIVE CO., LTD.) 08 December 2016 (2016-12-08)<br>claim 1 | 1-8 |
| A | JP 2013-214178 A (VISETEC CO., LTD.) 17 October 2013 (2013-10-17)<br>paragraph [0078] | 1-8 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

22

## INTERNATIONAL SEARCH REPORT
### Information on patent family members

International application No.

**PCT/JP2023/028500**

| Patent document cited in search report | | | Publication date (day/month/year) | Patent family member(s) | Publication date (day/month/year) |
|---|---|---|---|---|---|
| JP | 2022-166369 | A | 02 November 2022 | (Family: none) | |
| JP | 2020-85997 | A | 04 June 2020 | (Family: none) | |
| JP | 2016-206691 | A | 08 December 2016 | (Family: none) | |
| JP | 2013-214178 | A | 17 October 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003281664 A